# EUROPEAN PATENT SPECIFICATION

(11) **EP 4 194 732 B1**
(45) Date of publication and mention of the grant of the patent: **30.07.2025**
(21) Application number: 22211310.2
(22) Date of filing: 05.12.2022
(51) Int. Cl.: F16L 19/10, F16L 19/12, F16L 19/08

(54) **FITTING HAVING A GRIP RING**
FITTING MIT GREIFRING
RACCORD AVEC ANNEAU DE PRÉHENSION

(30) Priority: 10.12.2021 LU 500977
(43) Date of publication of application: 14.06.2023
(73) Proprietor: Aliaxis Research & Technology, 78990 Élancourt (FR)
(72) Inventor: ADELMAND, Hemin, 78990 Élancourt (FR); TEIXEIRA PINTO, José, 78990 Élancourt (FR); BRUSA, Fabrizio, 78990 Élancourt (FR); PRIDHAM, Malcolm, 78990 Élancourt (FR); VALKENBURG, Mark, 78990 Élancourt (FR); LE MERRER, Anne-Sophie, 78990 Élancourt (FR)
(74) Representative: Sonnenberg Harrison Partners

(56) References cited:
- EP-A2- 1 519 094
- FR-A1- 2 437 560
- GB-A- 2 210 123
- US-A1- 2004 041 399
- US-A1- 2019 390 801

## Description

### Cross-reference to related applications

The present application claims priority to the Luxembourg patent application LU500977 filed on 10 December 2021.

### Field of the invention

The present invention concerns mechanical fittings with a grip ring. The present invention also concerns a method of assembly of such mechanical fittings.

Mechanical fittings with a grip ring, which can connect tubes, are well known in the field of tubing, piping and line system installations, for example for pipeline systems transporting and distributing water.

Mechanical fittings are used to connect not only pipes made from plastic or composite usually as an alternative to press fittings or to soldering. Press fittings are usually used to connect appropriately arranged sections of pipe, with their connecting pieces being inserted into the ends of the pipes to be connected, where they are then usually de-formed or crimped or pressed to create a non-releasable interconnection between pipes. In contrast thereto mechanical fittings are usually not requiring specific crimping tools as the fitting usually includes a movable part providing for the engagement of the fitting with the pipe.

Typically, a mechanical fitting for the fixation of a pipe inserted therein, comprises a fitting body, a grip ring with inner teeth designed to penetrate into the pipe during tightening of the grip ring for gripping the pipe, a nut for tightening the grip ring against the pipe, and a rubber joint for sealing between the fitting body and the pipe. The grip ring is tightened by the nut for gripping the pipe inserted therein, and the grip ring is designed to compress the rubber joint against the fitting body when being tightened by the nut.

The tube, pipe, or conduit systems are assembled in several steps: first an end of the tube or pipe is inserted into a fitting, and then the grip ring is pressed against the tube by the nut, leading to the penetration of the teeth into the pipe and the crimping of the fitting against the pipe crimped to guarantee good mechanical strength and a leaktight installation. GB 2 210 123 A discloses a fitting for the fixation of a pipe inserted therein according to the preamble of claim 1.

One issue with the know mechanical fitting is the failure of the nut due to the high forces. Another issue is that mechanical fittings are sometimes more prone fort leakages.

It is an object of the present invention to provide a fitting in which the failure mode is reduced.

### Summary of the invention

To this end, the present invention proposes a fitting for the fixation of a pipe inserted therein, according to claim 1, and an assembly, according to claim 12. In particular, the present invention proposes a fitting for the fixation of a pipe inserted therein, comprising a fitting body, a grip ring with inner teeth designed to penetrate into the pipe during tightening of the grip ring for gripping the pipe, a nut for tightening the grip ring against the pipe, and a joint, e.g. made of rubber, for sealing between the fitting body and the pipe. The grip ring is tightened by the nut for gripping the pipe inserted therein, and the grip ring is designed to compress the joint against the fitting body when being tightened by the nut. The grip ring extends axially along a main axis between a first ring end and a second ring end, the grip ring having a nut contact part extending axially from the first ring end, a joint contact part extending axially from the second ring end, and a force transmission part extending axially between the nut contact part and the joint contact part. The force transmission part is connected to the nut contact part by a first deflection zone and is connected to the joint contact part by a second deflection zone. The inner teeth are located on a radially inner gripping surface of the nut gripping part. The first deflection zone has an outer concave deflection surface. The nut contact part has a radial outer sliding surface for receiving the nut, the radial outer sliding surface having a nut sliding surface in contact with the nut. The nut contact part has a radial stop for the nut. The radial outer sliding surface has a nut stop surface on a front side of the radial stop, the outer concave deflection surface being located on the rear side of the radial stop. A transition surface is provided between the nut sliding surface and the nut stop surface, the transition surface being curved in a concave manner. The nut sliding surface and the nut stop surface form a single curved surface.

With this design, the grip ring is designed to allow a radial movement of the nut contact part towards the pipe and an axial movement of the grip ring for contacting the joint.

In the following the joint will partly be referred to as a rubber joint, but the invention should not be construed as being limited to a rubber joint, other materials for the joint being also possible.

By providing the teeth between the first deflection zone and the first grip end, in other words exclusively below the nut contact part, the fitting is configured such that, upon tightening of the nut the axial movement for contacting the joint is entirely subsequent to or occurs at least in part after said radial movement of the nut contact part has started during tightening of the nut for gripping.

It should be noted that the grip ring provides two functions, which otherwise requires two separated elements in the prior art: the gripping function with the inner teeth and the (rubber) joint compression. Therefore, with the fitting of the present invention, the grip-ring alone provides two functions simultaneously; griping the pipe to maintain it and pushing the joint, such that the latter is compressed to provide sealing function. This reduces the number of pieces in a mechanical fitting, since usually, two pieces are needed to provide griping and sealing function.

In an aspect, the inner teeth are located exclusively on the nut gripping part. With other word, the contact zone between the grip ring and the nut, when the nut is tightened on the grip ring, encompasses axially only the nut contact part, with the inner teeth, but does not cover the remainder of the fitting body, in particular neither the transmission part nor the joint contact part compressing the joint. This is different from the prior art ring, in which the contact zone of the nut and the grip ring usually extends over the grip ring and the additional ring for compression the joint. Hence, by reducing the contact zone between the grip ring and the nut on one axial part of the grip ring, it becomes possible to reduce the forces acting on the nut, in particular the axial forces, which leads to possible failure of the nut.

In particular, the total force transmitted to the nut through the grip-ring can be divided into an axial force component and a radial component. The geometry of the grip ring allows reducing the axial force component. Indeed, it has been recognized that the axial component of total force favorizes crack initiation and crack propagation in the root of the last thread of nut, while the radial component tries to open the back of nut radially outwardly. Increasing of radial component in favor of decreasing the axial component enables saving material required to make a robust nut.

In an aspect, the second deflection zone has an inner concave deflection surface. The deflection surfaces are provided to absorb the forces resulting from the crimping of the teeth into the tube on the nut contact part side and from the compression of the rubber joint one the joint contact part. In other words, the deflection zone allows for an improved handling of stress inside the grip ring. Indeed, the total force inside the mechanical fitting is transmitted through the grip-ring to the nut. The total force is generated by the compressed (rubber) joint and the gripping force with the teeth gripping the pipe, i.e. a compression force and a gripping force generated to maintain the griping gripped against pushout and pull-out force exposed to the mechanical fitting during its lifecycle.

With other words, the outer sliding surface defines the contact zone of the nut with the grip ring, and the outer concave deflection surface is provided outside of the contact zone between the nut and the grip ring, for absorbing the force transmitted to the transmission part. In a preferred configuration the contact occurs among substantially similarly sloping surfaces.

The nut sliding surface and the nut stop surface form a single curved surface in a concave manner.

In an aspect, the joint contact part is provided at is free end with a joint contact surface designed to compress the (rubber) joint against the fitting body and/or the pipe, wherein the joint contact surface is slanted towards the radial inner surface, the joint contact surface extending radially inwardly and axially inwardly. Providing a slanted joint contact surface helps reducing the axial force resulting from the compression of the (rubber) joint, in turn reducing the load exerted on the nut.

In another aspect, the joint contact part forms an inner radial protrusion for the deformation part, the second deflection surface being on an inner end of the joint contact part opposite to the second ring end, e.g. to the free end. Preferably the second deflection surface defines a contactless zone to avoid concentration of the stress.

In an aspect, the rubber joint is non-pre-tensioned by joint contact part or during pipe insertion before tightening of the nut. At the start of tightening the nut, the axial movement of the grip-ring will compress the joint and maintain it under tension. The (rubber) joint is free to move axially if the space is available. Therefore, with this grip ring, the mechanical fitting does not need to put the joint under pretension to assure the sealing.

In an aspect, the fitting is designed so that at least one of these features art 5a tained:
the angle between the nut sliding surface and the main axis lying in the range of 6 to 20 degrees,
the angle between the nut stop surface and the main axis lying in the range of 30 to 90 degrees,
the slanted angle being in the range of 5-20°:
   the inclination of the teeth being at an angle in the range of 3-20°.

By providing one or more of the angles mentioned above, the load can be distributed homogenously, and load concentration can be avoided. Therefore, the failure mode can be regulated by regulating the component of total force.

In an aspect, the grip ring comprises a plurality of axial slots extending axially from the first ring end, the slots extending axially preferably at least up to the first deflection zone and more preferably up to the second deflection zone. The axial slots allow movement of the grip ring in the radial direction.

Advantageously, the force transmission part is at least as long as the gripping part, preferably longer than the gripping part.

The present invention also teaches an assembly of a pipe and a fitting as described above.

### Brief Description of the figures

Other characteristics and advantages of the invention will be more clearly evident upon reading the description of several currently preferred embodiments, provided as examples only, with reference to the attached drawings, wherein:
- Figure 1 shows a mechanical fitting according to a first aspect of the present invention,
- Figure 2 is cross section of the press fitting of Fig. 1,
- Figure 3 is a detailed view of different press fitting according to a first aspect of the present invention,
- Figure 4 is a detailed view of a grip ring of a mechanical fitting in one aspect of the present invention,
- Figure 5 a view of the grip ring in one aspect of the invention,
- Figure 6 a view of the grip ring in one aspect of the invention,
- Figure 7 to 9 show the mechanical fitting at different steps of a crimping process according to one aspect of the invention.

In the figures, identical parts are identified using the same reference numbers.

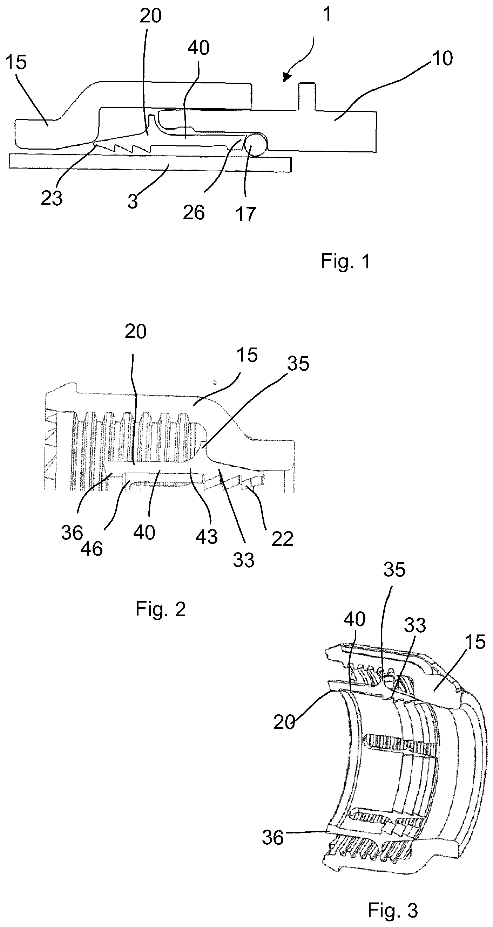

Figures 1 to 3 show a mechanical fitting 1 allowing the connection of a tube according to one aspect of the present invention. The tube may be for example a multilayer pipe of a multilayer piping systems for hot and cold-water installations inside buildings. The fitting may form one side of a connector having similar or another kind of fitting on its other end or side. The fitting may also be provided at a port of a fluidic device for connecting a pipe thereto.

The mechanical fitting 1 comprises a main fitting body 10 for receiving a pipe end 3 to be connected, a grip ring 20 provided to be crimped on the pipe end, a nut 15 for tightening the grip ring against the pipe, and a joint 17 for sealing between the fitting body and the pipe.

In the present embodiment the joint is made of rubber and will be referred to as a rubber joint, but the person skilled in the art will realise that other materials can be used instead of rubber. The use of the term rubber joint should thus not be construed as limiting the invention to rubber as other materials could be involved.

The fitting body 10 extends in the axial direction X-X.

The grip ring 20 has inner teeth 22 designed to penetrate into the pipe during tightening of the grip ring by the nut 15, for gripping the pipe inserted therein.

The grip ring 20 is designed to compress the rubber joint 17 against the fitting body 10 and the pipe 3when tightened by the nut.

The grip ring 20 extends axially along a main axis between a first ring end 23 on the main fitting body side and a second ring end 26 on the free end side of the mechanical fitting 1.

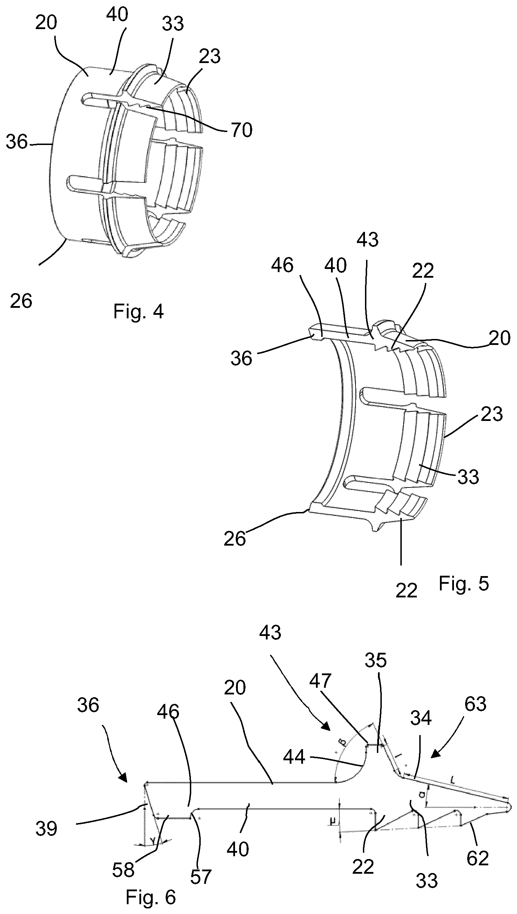

The grip ring is illustrated on Figures 3 to 6. The grip ring 20 is provided with a nut contact part 33 extending axially from the first ring end 23, a joint contact part 36 extending axially from the second ring end 26, and a force transmission part 40 extending axially between the nut contact part 33 and the joint contact part 36.

The joint contact part 36 is provided at is free end with a rubber contact surface 39 designed to compress the rubber joint 17 against the fitting body and/or the pipe.

The force transmission part 40 is connected to the nut contact part 33 by a first deflection zone 43 and is connected to the joint contact part 36 by a second deflection zone 46.

The nut contact part 33 is provided to receive the nut 15 thereon and allow tightening of the nut 15. The nut contact part 33 has a radially outer sliding surface 63 for receiving the nut 15 and on which the nut can slide during tightening of the nut 15. The outer sliding surface 63 defines a contact zone of the nut with the grip ring.

The inner teeth 22 are located on a radially inner gripping surface 62 of the nut contact part 33. The nut contact part 33 is completely located behind the first deflection zone 43.

As can be seen on the figures, the inner teeth 22 are located completely between the first ring end 23 and the force transmission part 40. Thus, the contact zone between the grip ring and the nut, when the nut is tightened on the grip ring, encompasses axially only the nut contact part, with the inner teeth, but does not cover the remainder of the fitting body, in particular neither the transmission part nor the joint contact part compressing the joint. This helps reducing the forces acting on the nut, in particular the axial forces, which leads to possible failure of the nut.

In the example shown, there are three teeth, but this is a non-limiting example.

In addition, the teeth extend along an inclination angle µ lying in the range of 3-20°. The inclination angle is set to provide a homogeneous distribution of gripping force to avoid load concentration whilst a simultaneous penetration of the teeth in the pipe at the end of tightening process with the same deepness of teeth penetration.

The radial outer sliding surface 63 has a nut sliding surface L in contact with the nut and a nut stop surface I on a front side of a radial stop 35 provided to axially stop the nut 15 during tightening, in a tightened position.

A transition surface is provided between the nut sliding surface L and the nut stop surface I, the transition surface being curved in a concave manner.

The nut sliding surface L and the nut stop surface I form a single curved surface, which is preferably curved in a concave manner.

A first angle α between the nut sliding surface L and the main extension axis of the ring preferably lies in the range of 6 to 20 degrees. Such an angle allows to reduce the axial force on the nut in favor of radial force without reducing the gripping function performance. In turn, this allows reducing the failure on the nut.

It should be understood that a low degree of the first angle α ensures progressive and smooth penetration of the teeth 22 into the pipe 3. Indeed, as polymers have time dependent behavior, the progressive and smooth penetration of teeth avoid sudden increase of resistance, in consequence will avoid unexpected increase of required tightening force, this will avoid the damage during tighten the nut.

Therefore, the first angle α allows to avoid early gripping of the pipe until the end of the tightening process (nut closing) which would otherwise scratch the pipe 3 and generate non necessary resistance during tightening the nut against the nut, this will reduce the tightening force.

The first deflection zone 43 has an outer concave deflection surface 44. The outer concave deflection surface 44 is located on the rear side of the radial stop, and defines a cliff.

A second angle β is defined between the nut stop surface I and the main extension axis of the ring. The radial stop forms a cliff 47 above the concave deflection surface 44.

The cliff 47 and the concave deflection surface 44 helps pushing back the force transmission part 40 towards the rubber joint 17, to deform the rubber joint 17 and ensure water sealing. The second angle β also allows a redistribution of the axial load generated on the grip ring 20 due to the reaction of rubber joint compression into both a radial and an axial force.

Thus, the first deflection zone 43 provides an improved handling of stress inside the grip ring.

Preferably, the second angle β lies in the range between 30° to 90°. This range moderates a total load required to compress the rubber joint 17. This effect is even reinforced in combination with the first angle α.

The joint contact part 36 forms an inner radial protrusion 58 protruding from the deformation part 40, forming a second cliff above a second concave deflection surface 57 formed on an inner end of the joint contact part 36 opposite to the free end.

The skilled person understands that the inner radial protrusion 58 and the second deflection surface 57 defines the second deflection zone 46. This provides a contactless zone to avoid concentration of the stress. The second deflection zone also allows for an improved handling of stress inside the grip ring 20.

The joint contact surface 39 extends radially inwardly and axially inwardly. With other words, the joint contact surface 39 is slanted with a slanted angle γ.

Providing a slanted joint contact surface helps reducing the axial force resulting from the compression of the (rubber) joint, in turn reducing the load exerted on the nut.

The slanted angle γ preferably lies in the range between 5° to 20 °, to divide the compression load generated due to the deformed rubber joint, into two components; the axial component and the radial component.

The slanted angle γ guides the compressed rubber joint to deform towards the pipe 3, and to fill the gap between the pipe, the body and the grip-ring. In particular, the slanted angle γ provides a radial component of compression load to deform the rubber against the pipe and the body, increasing water tightening capacity of the rubber joint with less tightening effort.

In addition, with a slanted angle γ, only axial component of compression load is transmitted to the nut, and the amount of radial force transmitted to the nut is reduced. In turn, the amount of material used in nut can be reduced.

The grip ring comprises a plurality of axial slots 70 extending axially from the first ring end. The axial slots allow movement of the grip ring in the radial direction.

The slots 70 extend at least up to the first deflection zone 43. The slots can extend up to the second deflection zone 46, to allow even more movement of the grip ring 20 in the radial direction.

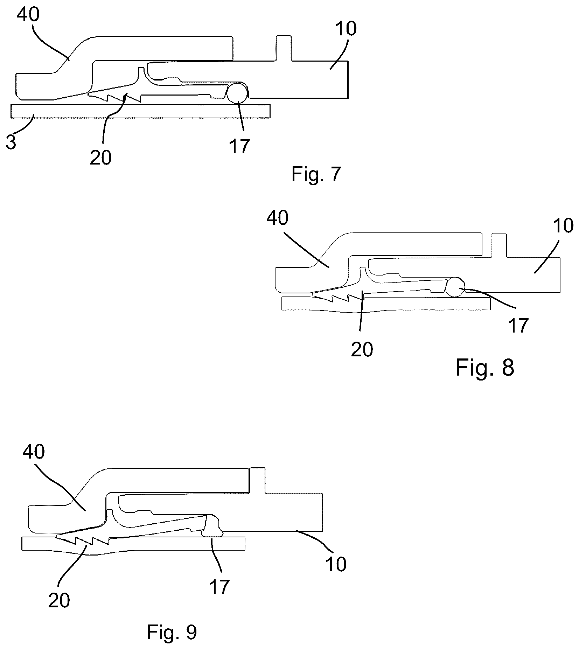

The advantage of the mechanical fitting will be better understood with reference to figures 7 to 9 showing the fitting at different stages of engagement.

In Figure 7, the mechanical fitting is fully open and the grip-ring is not engaged, the pipe can be inserted without effort. As can be seen on Fig. 7, the rubber joint 17 there is an absence of contact between the rubber joint and the joint contact part before tightening of the nut.

In figure 8, the nut has started sliding on the nut contact part to start tightening the grip ring. The grip-ring is griping the pipe, but the rubber ring is not yet engaged. The rubber joint starts deforming.

At the start of tightening the nut, the axial movement of the grip-ring compresses the joint and maintain it under tension. The (rubber) joint is free to move axially if the space is available. Therefore, with this grip ring, the mechanical fitting does not need to put the joint under pretension to assure the sealing.

In figure 9, the nut is fully closed, the grip-ring is maintaining the pipe and deforms the rubber ring. Therefore, at this position, the grip-ring has two functions, maintaining the pipe against pullout force and deform the rubber joint to insure the water tightening.

In particular, the total force transmitted to the nut through the grip-ring can be divided into an axial force component and a radial component, and the geometry of the grip ring allows reducing the axial force component and increasing the radial force component, as this is mainly the axial force which favorizes crack initiation and crack propagation in the root of the last thread of nut.

The angles are optimised to control the failure mode through regulating the distrbution of the load transmitted to the nut. Through controlling the failure mode, these angles allow to reduce the amount of material used in the nut to stand the amout of load carried by the nut.

The optimization of angles allows to reduce the tightening force of mechanical fitting from 30 to 50 % (depending on the diameter of mechanical fitting) in comparison with similare product, in other words, it reduces the generated load on the mechanical fitting. Less material is needed for nut to resiste the generated load inside the mechanical fitting.

## Claims

1. Fitting for the fixation of a pipe (3) inserted therein, comprising a fitting body (10), a grip ring (20) with inner teeth (22) designed to penetrate into the pipe during tightening of the grip ring for gripping the pipe, a nut (15) for tightening the grip ring against the pipe, and a joint (17) for sealing between the fitting body and the pipe,
wherein the grip ring (20) is tightened by the nut (15) for gripping the pipe inserted therein, and the grip ring is designed to compress the joint against the fitting body when being tightened by the nut,
wherein the grip ring (20) extends axially along a main axis between a first ring end (23) and a second ring end (26), the grip ring having a nut contact part (33) on which the nut is mounted, a joint contact part (36) for pushing the joint against the fitting body, and a force transmission part (40),
wherein
the nut contact part (33) extends axially from the first ring end (23), the joint contact part (36) extends axially from the second ring end (26), and the force transmission part (40) extending axially between the nut contact part (33) and the joint contact part (36), said force transmission part (40) being connected to the nut contact part (33) by a first deflection zone (43) and connected to the joint contact part (36) by a second deflection zone (46),
wherein the inner teeth are located on a radially inner gripping surface (62) of the nut contact part, between the first deflection zone (43) and the first ring end (23),
the grip ring being designed to allow a radial movement of the nut contact part towards the pipe and an axial movement of the grip ring for contacting the joint,
the first deflection zone (43) has an outer concave deflection surface (44),
the nut contact part (33) has a radial outer sliding surface (63) for receiving the nut,
the radial outer sliding surface (63) having a nut sliding surface (L) in contact with the nut,
**characterized in that**
the nut contact part (33) has a radial stop (35) for the nut,
the radial outer sliding surface (63) has a nut stop surface (I) on a front side of the radial stop, the outer concave deflection surface (44) being located on the rear side of the radial stop (35), a transition surface is provided between the nut sliding surface (L) and the nut stop surface (I), the transition surface being curved in a concave manner,
the nut sliding surface and the nut stop surface form a single curved surface.

2. Fitting according to claim 1, wherein the inner teeth (22) are located exclusively on the nut contact part (33).

3. Fitting according to claim 1 or 2, wherein the second deflection zone (46) has an inner concave deflection surface (57).

4. Fitting according to any of claims 1 to 3, wherein
the nut sliding surface (L) and the nut stop surface (I) form a single curved surface curved in a concave manner.

5. Fitting according to any of the preceding claims, wherein
the joint contact part (36) is provided at its free end with a joint contact surface (39) designed to compress the joint (17) against the fitting body and/or the pipe,
wherein the joint contact surface (39) is slanted towards the radial inner surface, the joint contact surface extending radially inwardly and axially inwardly.

6. Fitting according to any of the preceding claims, wherein the joint contact part (36) forms an inner radial protrusion (58) for the force transmission part (40), the second deflection surface being on an inner end of the joint contact part opposite to the second ring end (26).

7. Fitting according to any of the preceding claims , wherein the second deflection surface (57) defines a contactless zone to avoid concentration of the stress.

8. Fitting according to any of the preceding claims, wherein the joint (17) is non-pre-tensioned by the joint contact part (33) or during pipe insertion before tightening of the nut.

9. Fitting according to any of the preceding claims, wherein at least one of:
the angle (α) between the nut sliding surface and the main axis lying in the range of 6 to 20 degrees,
the angle (β) between the nut stop surface and the main axis lying in the range of 30 to 90 degrees,
the slanted angle (γ) in the ranger of 5-20°,
the inclination of the teeth (22) with an angle (µ) in the range of 3-20°.

10. Fitting according to any of the preceding claims, wherein
the grip ring (20) comprises a plurality of axial slots (70) extending axially from the first ring end (23), the slots (70) extending axially preferably at least up to the first deflection zone and more preferably up to the second deflection zone.

11. Fitting according to any of the preceding claims, wherein the force transmission part (40) is at least as long as the nut contact part (33), preferably longer than the nut contact part.

12. Assembly of a pipe and a fitting according to any one of claims 1 to 11.

## Patentansprüche

1. Fitting zur Fixierung eines darin eingeführten Rohrs (3), umfassend einen Fittingkörper (10), einen Greifring (20) mit Innenzähnen (22), die dazu ausgelegt sind, während des Anziehens des Greifrings zum Greifen des Rohrs in das Rohr einzudringen, eine Mutter (15) zum Anziehen des Greifrings gegen das Rohr und eine Dichtung (17) zum Abdichten zwischen dem Fittingkörper und dem Rohr,
wobei der Greifring (20) durch die Mutter (15) zum Greifen des darin eingeführten Rohrs angezogen wird und der Greifring dazu ausgelegt ist, die Dichtung gegen den Fittingkörper zu drücken, wenn er durch die Mutter angezogen wird,
wobei sich der Greifring (20) axial entlang einer Hauptachse zwischen einem ersten Ringende (23) und einem zweiten Ringende (26) erstreckt, wobei der Greifring einen Mutternkontaktteil (33), auf dem die Mutter montiert ist, einen Dichtungskontaktteil (36) zum Drücken der Dichtung gegen den Fittingkörper und einen Kraftübertragungsteil (40) aufweist,
wobei
sich der Mutternkontaktteil (33) axial von dem ersten Ringende (23) erstreckt, sich der Dichtungskontaktteil (36) axial von dem zweiten Ringende (26) erstreckt und sich der Kraftübertragungsteil (40) axial zwischen dem Mutternkontaktteil (33) und dem Dichtungskontaktteil (36) erstreckt, wobei der Kraftübertragungsteil (40) durch eine erste Ablenkzone (43) mit dem Mutternkontaktteil (33) verbunden ist und durch eine zweite Ablenkzone (46) mit dem Dichtungskontaktteil (36) verbunden ist,
wobei sich die Innenzähne auf einer radial inneren Greiffläche (62) des Mutternkontaktteils zwischen der ersten Ablenkzone (43) und dem ersten Ringende (23) befinden,
wobei der Greifring dazu ausgelegt ist, eine radiale Bewegung des Mutternkontaktteils in Richtung des Rohrs und eine axiale Bewegung des Greifrings zum Kontaktieren der Dichtung zu ermöglichen,
die erste Ablenkzone (43) eine äußere konkave Ablenkfläche (44) aufweist,
der Mutternkontaktteil (33) eine radiale äußere Gleitfläche (63) zum Aufnehmen der Mutter aufweist,
die radiale äußere Gleitfläche (63) eine Mutterngleitfläche (L) in Kontakt mit der Mutter aufweist,
**dadurch gekennzeichnet, dass**
der Mutternkontaktteil (33) einen radialen Anschlag (35) für die Mutter aufweist,
die radiale äußere Gleitfläche (63) eine Mutternanschlagfläche (I) auf einer Vorderseite des radialen Anschlags aufweist, wobei sich die äußere konkave Ablenkfläche (44) auf der Rückseite des radialen Anschlags (35) befindet,
eine Übergangsfläche zwischen der Mutterngleitfläche (L) und der Mutternanschlagfläche (I) vorgesehen ist, wobei die Übergangsfläche konkav gekrümmt ist,
die Mutterngleitfläche und die Mutternanschlagfläche eine einzige gekrümmte Fläche bilden.

2. Fitting nach Anspruch 1, wobei sich die Innenzähne (22) ausschließlich auf dem Mutternkontaktteil (33) befinden.

3. Fitting nach Anspruch 1 oder 2, wobei die zweite Ablenkzone (46) eine innere konkave Ablenkfläche (57) aufweist.

4. Fitting nach einem der Ansprüche 1 bis 3, wobei
die Mutterngleitfläche (L) und die Mutternanschlagfläche (I) eine einzige gekrümmte Fläche bilden, die konkav gekrümmt ist.

5. Fitting nach einem der vorhergehenden Ansprüche, wobei
der Dichtungskontaktteil (36) an seinem freien Ende mit einer Dichtungskontaktfläche (39) versehen ist, die dazu ausgelegt ist, die Dichtung (17) gegen den Fittingkörper und/oder das Rohr zu drücken,
wobei die Dichtungskontaktfläche (39) in Richtung der radialen Innenfläche geneigt ist, wobei sich die Dichtungskontaktfläche radial nach innen und axial nach innen erstreckt.

6. Fitting nach einem der vorhergehenden Ansprüche, wobei der Dichtungskontaktteil (36) einen inneren radialen Vorsprung (58) für den Kraftübertragungsteil (40) bildet, wobei sich die zweite Ablenkfläche an einem inneren Ende des Dichtungskontaktteils gegenüber dem zweiten Ringende (26) befindet.

7. Fitting nach einem der vorhergehenden Ansprüche, wobei die zweite Ablenkfläche (57) eine kontaktlose Zone definiert, um eine Konzentration der Spannung zu vermeiden.

8. Fitting nach einem der vorhergehenden Ansprüche, wobei die Dichtung (17) durch den Dichtungskontaktteil (33) oder während des Einführens des Rohrs vor dem Anziehen der Mutter nicht vorgespannt wird/ist.

9. Fitting nach einem der vorhergehenden Ansprüche, wobei mindestens einer von:
der Winkel (α) zwischen der Mutterngleitfläche und der Hauptachse liegt im Bereich von 6 bis 20 Grad ,
der Winkel (b) zwischen der Mutternanschlagfläche und der Hauptachse liegt im Bereich von 30 bis 90 Grad,
der geneigte Winkel (γ) liegt im Bereich von 5-20°,
die Neigung der Zähne (22) mit einem Winkel (µ) im Bereich von 3-20°.

10. Fitting nach einem der vorhergehenden Ansprüche, wobei
der Greifring (20) eine Vielzahl von axialen Schlitzen (70) umfasst, die sich axial von dem ersten Ringende (23) erstrecken, wobei sich die Schlitze (70) axial vorzugsweise mindestens bis zu der ersten Ablenkzone und weiter bevorzugt bis zu der zweiten Ablenkzone erstrecken.

11. Fitting nach einem der vorhergehenden Ansprüche, wobei der Kraftübertragungsteil (40) mindestens so lang wie der Mutternkontaktteil (33), vorzugsweise länger als der Mutternkontaktteil, ist.

12. Anordnung aus einem Rohr und einem Fitting nach einem der Ansprüche 1 bis 11.

## Revendications

1. Raccord pour la fixation d'un tuyau (3) inséré dans celui-ci, comprenant un corps de raccord (10), une bague de préhension (20) avec des dents internes (22) conçues pour pénétrer dans le tuyau pendant le serrage de la bague de préhension pour saisir le tuyau, un écrou (15) pour serrer la bague de préhension contre le tuyau, et un joint (17) pour étanchéifier entre le corps de raccord et le tuyau,
dans lequel la bague de préhension (20) est serrée par l'écrou (15) pour saisir le tuyau qui y est inséré, et la bague de préhension est conçue pour comprimer le joint contre le corps de raccord lorsqu'elle est serrée par l'écrou,
dans lequel la bague de préhension (20) s'étend axialement le long d'un axe principal entre une première extrémité de bague (23) et une deuxième extrémité de bague (26), la bague de préhension ayant une partie de contact d'écrou (33) sur laquelle l'écrou est monté, une partie de contact de joint (36) pour pousser le joint contre le corps de raccord, et une partie de transmission de force (40),
dans lequel
la partie de contact d'écrou (33) s'étend axialement à partir de la première extrémité de bague (23), la partie de contact de joint (36) s'étend axialement à partir de la deuxième extrémité de bague (26), et la partie de transmission de force (40) s'étendant axialement entre la partie de contact d'écrou (33) et la partie de contact de joint (36), ladite partie de transmission de force (40) étant reliée à la partie de contact d'écrou (33) par une première zone de déviation (43) et reliée à la partie de contact de joint (36) par une deuxième zone de déviation (46),
dans lequel les dents internes sont situées sur une surface de préhension radialement interne (62) de la partie de contact d'écrou, entre la première zone de déviation (43) et la première extrémité de bague (23),
la bague de préhension étant conçue pour permettre un mouvement radial de la partie de contact d'écrou vers le tuyau et un mouvement axial de la bague de préhension pour venir en contact avec le joint,
la première zone de déviation (43) a une surface de déviation concave externe (44),
la partie de contact d'écrou (33) a une surface de glissement externe radiale (63) pour recevoir l'écrou,
la surface de glissement externe radiale (63) ayant une surface de glissement d'écrou (L) en contact avec l'écrou,
**caractérisé en ce que**
la partie de contact d'écrou (33) a une butée radiale (35) pour l'écrou,
la surface de glissement externe radiale (63) a une surface de butée d'écrou (I) sur un côté avant de la butée radiale, la surface de déviation concave externe (44) étant située sur le côté arrière de la butée radiale (35),
une surface de transition est prévue entre la surface de glissement d'écrou (L) et la surface de butée d'écrou (I), la surface de transition étant incurvée de manière concave,
la surface de glissement d'écrou et la surface de butée d'écrou forment une surface incurvée unique.

2. Raccord selon la revendication 1, dans lequel les dents internes (22) sont situées exclusivement sur la partie de contact d'écrou (33).

3. Raccord selon la revendication 1 ou 2, dans lequel la deuxième zone de déviation (46) a une surface de déviation concave interne (57).

4. Raccord selon l'une quelconque des revendications 1 à 3, dans lequel
la surface de glissement d'écrou (L) et la surface de butée d'écrou (I) forment une surface incurvée unique incurvée de manière concave.

5. Raccord selon l'une quelconque des revendications précédentes, dans lequel
la partie de contact de joint (36) est prévue au niveau de son extrémité libre avec une surface de contact de joint (39) conçue pour comprimer le joint (17) contre le corps de raccord et/ou le tuyau,
dans lequel la surface de contact de joint (39) est inclinée vers la surface interne radiale, la surface de contact de joint s'étendant radialement vers l'intérieur et axialement vers l'intérieur.

6. Raccord selon l'une quelconque des revendications précédentes, dans lequel la partie de contact de joint (36) forme une saillie radiale interne (58) pour la partie de transmission de force (40), la deuxième surface de déviation étant sur une extrémité interne de la partie de contact de joint opposée à la deuxième extrémité de bague (26).

7. Raccord selon l'une quelconque des revendications précédentes, dans lequel la deuxième surface de déviation (57) définit une zone sans contact pour éviter la concentration de la contrainte.

8. Raccord selon l'une quelconque des revendications précédentes, dans lequel le joint (17) n'est pas précontraint par la partie de contact de joint (33) ou pendant l'insertion de tuyau avant le serrage de l'écrou.

9. Raccord selon l'une quelconque des revendications précédentes, dans lequel au moins l'un parmi :
l'angle (α) entre la surface de glissement d'écrou et l'axe principal se trouvant dans la plage de 6 à 20 degrés,
l'angle (β) entre la surface de butée d'écrou et l'axe principal se trouvant dans la plage de 30 à 90 degrés,
l'angle incliné (γ) dans la plage de 5 à 20°,
l'inclinaison des dents (22) avec un angle (µ) dans la plage de 3 à 20°.

10. Raccord selon l'une quelconque des revendications précédentes, dans lequel la bague de préhension (20) comprend une pluralité de fentes axiales (70) s'étendant axialement à partir de la première extrémité de bague (23), les fentes (70) s'étendant axialement de préférence au moins jusqu'à la première zone de déviation et plus préférablement jusqu'à la deuxième zone de déviation.

11. Raccord selon l'une quelconque des revendications précédentes, dans lequel la partie de transmission de force (40) est au moins aussi longue que la partie de contact d'écrou (33), de préférence plus longue que la partie de contact d'écrou.

12. Ensemble d'un tuyau et d'un raccord selon l'une quelconque des revendications 1 à 11.
